# EUROPEAN PATENT APPLICATION

(11) **EP 2 314 961 A1**
(43) Date of publication of application: **27.04.2011**
(21) Application number: 09808004.7
(22) Date of filing: 12.03.2009
(51) Int. Cl.: F25D 23/00, G06K 17/00, H01Q 7/00

(54) **STORAGE, STORAGE SYSTEM, METHOD FOR CONTROLLING STORAGE OR STORAGE SYSTEM, AND CONTROL PROGRAM THEREFOR**

(30) Priority: 20.08.2008 JP 2008211356
(71) Applicant: Panasonic Corporation, Kadoma-shi Osaka 571-8501 (JP)
(72) Inventor: KURIMOTO, Kazunori, Chuo-ku, Osaka-shi Osaka 540-6207 (JP); TSUJIMURA, Satoshi, Chuo-ku, Osaka-shi Osaka 540-6207 (JP); MIYASHITA, Norihiro, Chuo-ku, Osaka-shi Osaka 540-6207 (JP); NAKATANI, Naofumi, Chuo-ku, Osaka-shi Osaka 540-6207 (JP); EGUCHI, Osamu, Chuo-ku, Osaka-shi Osaka 540-6207 (JP); BAN, Yasuhiro, Chuo-ku, Osaka-shi Osaka 540-6207 (JP); KUROYAMA, Kazuhiro, Chuo-ku, Osaka-shi Osaka 540-6207 (JP); KURIHARA, Hiroaki, Chuo-ku, Osaka-shi Osaka 540-6207 (JP)
(74) Representative: Schwabe - Sandmair - Marx
(86) International application number: PCT/JP2009/001113
(87) International publication number: WO 2010/021068

(57) **Abstract**

A storage includes door opening/closure detector unit (5a) which detects whether an openable/closable door provided in refrigerating room (2a) is opened/closed, reader/writer unit (6) which transmits and receives information to and from an IC tag in refrigerating room (2a), feeding antenna unit (8a, 8b) which is fed with power from reader/writer unit (6) for wireless communication, controller unit (21) which feeds power to feeding antenna unit (8a, 8b) from reader/writer unit (6) when it is detected by door opening/closure detector unit (5a) that the openable/closable door is opened/closed, and information management unit (23) which manages the information read by reader/writer unit (6) as stock information. The storage can identify any storage room where a new entry to or a removal from the current stock takes place, thereby succeeding in management of the stock by each storage room.

## Description

### TECHNICAL FIELD

The present invention relates to a storage and a storage system for storage and management of an object to be stored such as food, wherein a storage room is identified by means of, for example, an IC tag, and a method and a program for controlling a storage and a storage system.

### BACKGROUND ART

There is a known technique developed for the management of stored objects such as food stock of a refrigerator, wherein a plurality of antennas are provided in the refrigerator and a wireless tag (IC tag) is appended to each of the objects stored therein to establish a communication between the refrigerator and the objects so that a storage position of each object can be identified by way of the communication.

In an example of the storage of this type, a plurality of antennas are provided inside the refrigerator to detect storage positions of objects in stock (refer to Patent Document 1).

FIG. 10 is a block diagram of a conventional refrigerator disclosed in Patent Document 1. Referring to FIG. 10, antennas 103a to 103n are embedded in heat insulating materials of side walls, rear surfaces of shelf boards, and the like in the body of the refrigerator. Antennas 103a to 103n communicate with wireless tags of foods respectively stored in sectionalized rooms of the refrigerator, such as a refrigerating room, a vegetable room, a changeover room, and a freezing room. Controller 101 identifies received food information and the antenna through which the information is received using reader 102 to detect the position of each food, and makes display device 104 display thereon the detection result. Display device 104 can display thereon any food newly stored as new stock information and also display a list of foods currently stored as stock information when needed. Because a user can check the stock information thus displayed, he does not have to open the refrigerator to check the food stock. This reduces temperature increases in the refrigerator, efficiently refrigerating the food stored therein.

In the conventional refrigerator wherein at least one antenna is provided in each storage room, the position of the stored food is confirmed by determining which of the antennas communicates with the wireless tag appended thereto. Because the storage position can be thus known by determining the antenna, it is required to restrict a detectable area covered by each antenna to one storage room only in order to manage the stock information by determining which of the antennas provided in the different storage rooms communicates with the relevant IC tag. To thus restrict the detectable region, it is demanded that an impedance adjustment be highly precise or a distance which allows the antenna and the IC tag to communicate be as short as possible in perspective of characteristics of a wireless communication. In the case where any of the storage rooms has a large capacity, it may be necessary to provide a large number of antennas in the storage room. In the case of failure to fully adjust the impedance, it may be necessary to provide a metal plate in a partitioning member between the storage rooms to block any electromagnetic wave or electric wave from leaking to the other storage room.
[Patent Document 1] Unexamined Japanese Patent Publication No. 2002-81848

### DISCLOSURE OF THE INVENTION

To replace any conventional devices wherein a storage position is identified by an antenna, the present invention provides a storage and a storage system wherein any storage room where stock information changes is identified by detecting whether a door is opened/closed to confirm the stock information in the event that an antenna detects IC tags in a plurality of storage rooms, and also provides a method and a program for controlling a storage and a storage system.

A storage according to the present invention includes: storage rooms formed by sectionalizing an interior space of the storage into a plurality of spaces; an openable/closable door provided in each of the storage rooms; a door opening/closure detector unit which detects whether the openable/closable door is opened/closed; a reader unit which reads information of a particular information recording medium in each of the storage rooms; and a feeding antenna unit which is fed with power from the reader unit for wireless communication. The storage according to the present invention further includes: a controller unit which feeds power to the feeding antenna unit from the reader unit in response to at least one of the opening and the closure of the openable/closable door detected by the door opening/closure detector unit; and an information management unit which manages the information read by the reader unit as stock information.

The storage thus configured can identify any storage room where a new entry to or a removal from the current stock takes place, thereby succeeding in management of the stock by each storage room. In the case where a detectable range of the feeding antenna unit covers a plurality of storage rooms, the storage room where the new entry to or the removal from the current stock takes place can be identified by detecting which of the doors is opened/closed. This makes it unnecessary to strictly adjust the impedance as required in the conventional storages in order to identify the detectable area. Further, there are no any particular restrictions to a communicatable distance between the feeding antenna unit and the particular information recording medium, it is unnecessary to provide a large number of antennas in any storage room having a large capacity, and no additional members are required, such as a metal plate provided in a partitioning member between the storage rooms in order to block electromagnetic wave or electric wave from leaking to the other storage room.

### BRIEF DESCRIPTION OF THE DRAWINGS

FIG. 1 is a configuration diagram of a storage system wherein a refrigerator according to an embodiment of the present invention is employed.
FIG. 2 is a schematic illustration of an antenna layout in the refrigerator according to the embodiment.
FIG. 3 is a block diagram illustrating the storage system wherein the refrigerator according to the embodiment is employed.
FIG. 4 is a flow chart illustrating a stock management operation of the storage system wherein the refrigerator according to the embodiment is employed.
FIG. 5 is a schematic illustration of detectable areas of feeding antennas in the refrigerator according to the embodiment.
FIG. 6 is a table reciting the feeding antennas to be power-fed in storage rooms of the refrigerator according to the embodiment.
FIG. 7 is a table illustrating a stock list of the refrigerator according to the embodiment.
FIG. 8 is another flow chart illustrating the stock management operation of the storage system wherein the refrigerator according to the embodiment is employed.
FIG. 9 is a table illustrating an exemplary stock entry/removal list of the storage system wherein the refrigerator according to the embodiment is employed.

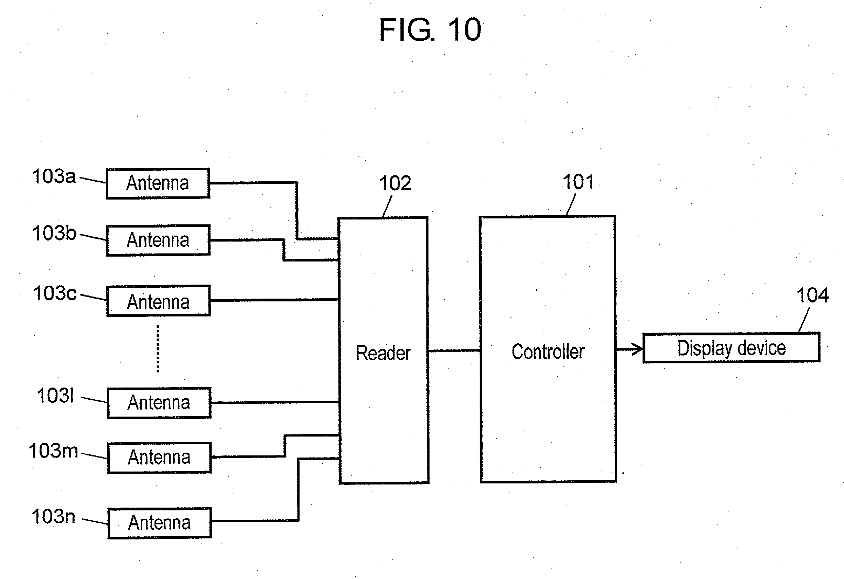

FIG. 10 is a block diagram of a conventional refrigerator.

### REFERENCE MARKS IN THE DRAWINGS

- 1: refrigerator
- 2a: refrigerating room
- 2b: changeover room
- 2c: vegetable room
- 2d: freezing room
- 4: openable/closable door
- 3: display unit
- 5: door opening/closure detector unit
- 6: reader/writer unit
- 7: antenna selector
- 8a, 8b, 8c: feeding antenna
- 9a, 9b: parasitic antenna
- 10: food
- 11: IC tag
- 21: controller unit
- 23: information management unit
- 24: web server
- 25: network unit
- 26: reporting unit
- 29: stock list
- 51: television
- 52: hub
- 53: relay device
- 54: LAN wiring
- 55: Internet network
- 56: mobile telephone
- 70: stock entry/removal list

### PREFERRED EMBODIMENTS FOR CARRYING OUT OF THE INVENTION

Hereinafter, an embodiment of the present invention is described referring to the drawings. However, any aspects of the present invention are not necessarily limited to the embodiment described below.

### (Embodiment)

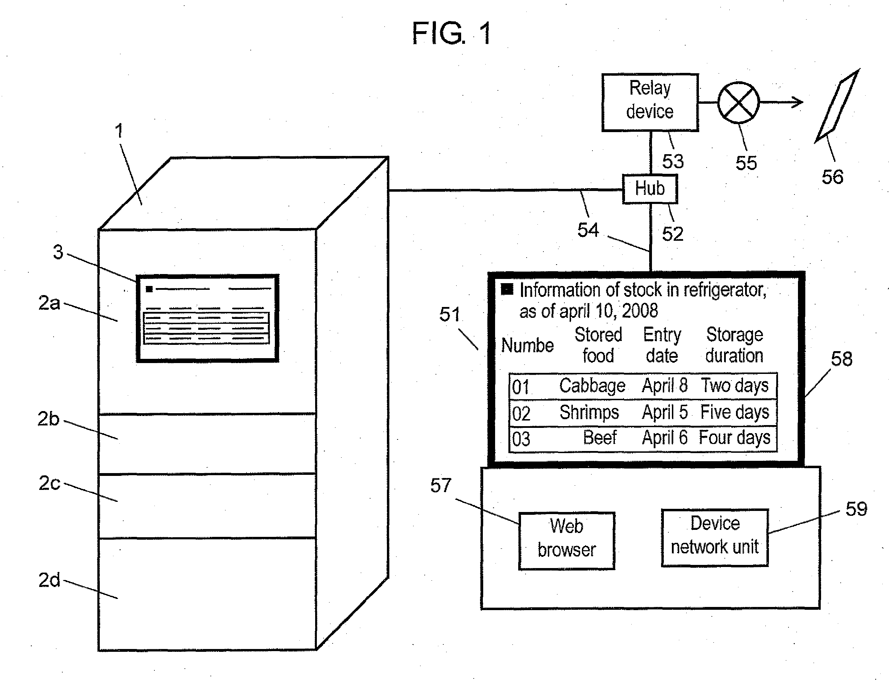

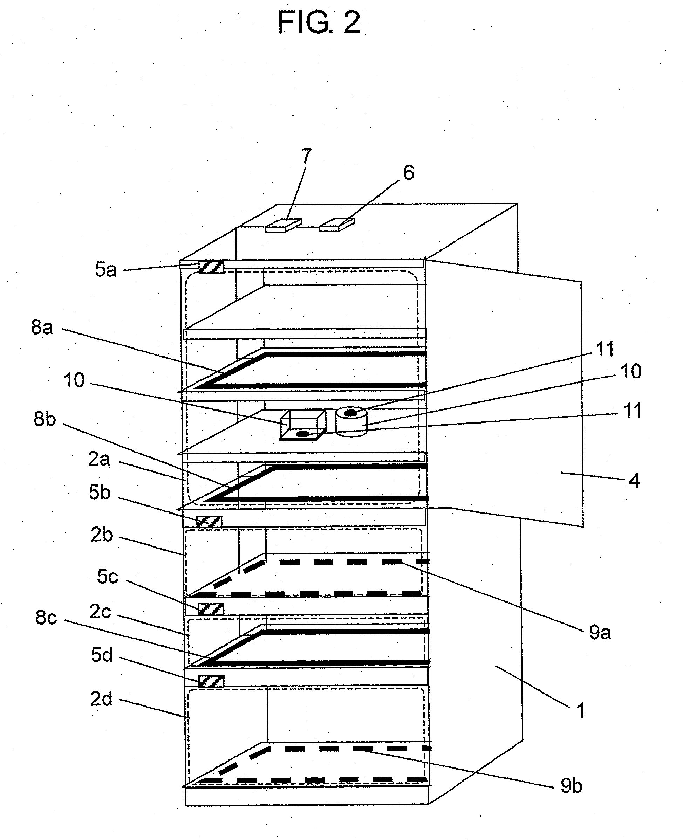

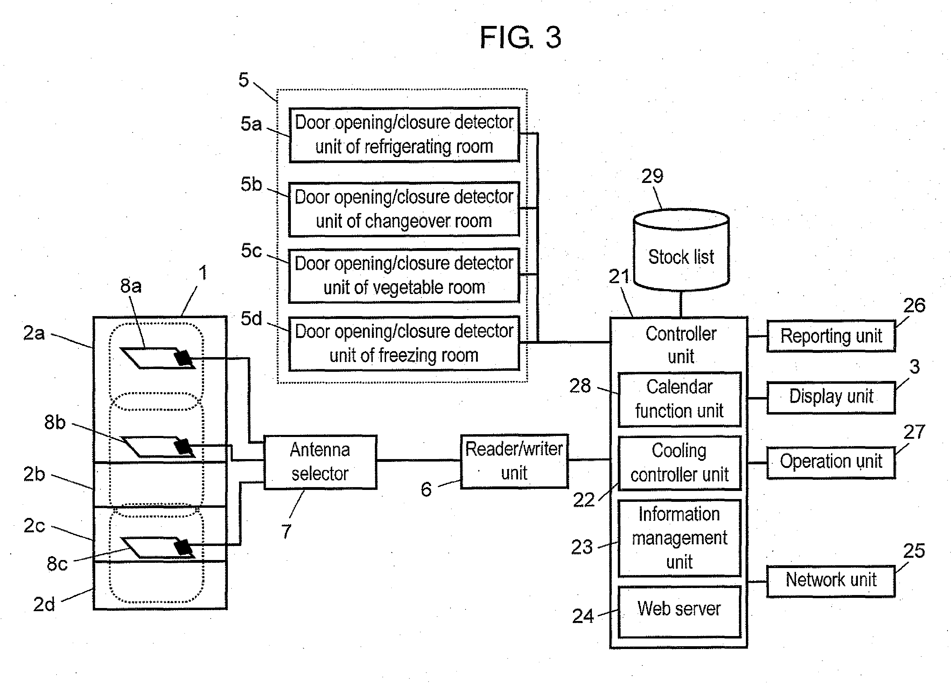

FIG. 1 is a configuration diagram of a storage system wherein a refrigerator according to an embodiment of the present invention is employed. FIG. 2 is a schematic illustration of an antenna layout in the refrigerator according to the present embodiment. FIG. 3 is a block diagram illustrating a stock management control of the storage system wherein the refrigerator according to the present embodiment is employed.

A particular information recording medium according to the present embodiment employs the RFID (Radio Frequency Identification) technique to manage a food stock in the refrigerator. A communication method of the RFID technique is employed in the present embodiment, which uses a passive IC (Integrated Circuit) tag requiring neither battery nor power feed in the band of 13.56 MHz according to the electromagnetic inductive coupling (HF (High Frequency) band). The HF band is suitable for the use in a refrigerator because it is less moisture-affected than the bands of UHF (Ultra High Frequency) and 2.4 GHz.

Referring to FIG. 1, refrigerator 1 includes four storage rooms, which are, from the top, refrigerating room 2a, changeover room 2b, vegetable room 2c, and freezing room 2d. A surface of a door provided in refrigerating room 2a is equipped with display unit 3. Refrigerator 1 can be connected by LAN (Local Area Network) wiring 54 to television 51 adapted to a network connection by way of hub 52.

Television 51 can display thereon information of the stock managed in refrigerator 1 by each of the storage rooms. According to the present embodiment, television 51 can display the same information as display contents of display unit 3. Referring to FIG. 1 reciting the stock information as of April 10, 2008, cabbage as the stored object; date of entry is April 8 and storage duration is two days, shrimps as the stored object; date of entry is April 5 and storage duration is five days, and beef as the stored object; date of entry is April 6 and storage duration is four days.

The upper side of hub 52 is connected to an external device by Internet network 55 through relay device 53 such as a modem or a router. Though not described in detail, the current stock of refrigerator 1 connected to Internet network 55 can be confirmed away from home on mobile telephone 56 or a personal computer.

Though refrigerator 1 and television 51 are connected by LAN wiring 54 in the described example, they can be connected by a wireless LAN. These devices may be used in a closed local network environment at home.

The layout positions of the antennas mounted for the management of the stock in refrigerator 1 are described referring to FIG. 2. According to the present embodiment, any openable/closable doors but openable/closable door 4 of refrigerating room 2a are provided in the form of a drawer. To help the description be more easily followed, all of the openable/closable doors but openable/closable door 4 of refrigerating room 2a are removed in the illustration of FIG. 2.

Referring to FIG. 2, the storage rooms are respectively provided with door opening/closure detector units 5a to 5d to detect whether the doors of the respective rooms in the refrigerator are open or closed. As door opening/closure detector units 5a to 5d, for example, push switches, magnetic switches, or optical switches that can be switched on and off are used.

The feeding antenna unit according to the present embodiment has three feeding antennas 8a to 8c. When food 10 having IC tag 11 appended thereto is stored in the refrigerator as an object to be stored, feeding antennas 8a to 8c are supplied with power by reader/writer unit 6 which is a reader unit, so that reader/writer unit 6 can read information of IC tag 11. Feeding antenna 8a is mounted in a tray positioned second from the top of refrigerating room 2a. Feeding antenna 8b is mounted in a partitioning member between refrigerating room 2a and changeover room 2b. Feeding antenna 8c is mounted in a partitioning member between vegetable room 2c and freezing room 2d. When an instruction from reader/writer unit 6 is received, antenna selector 7 is controlled to select any desirable one of feeding antennas 8a to 8c and feed power thereto, so that the information of IC tag 11 is read.

In a bottom surface of freezing room 2d and the partitioning member between changeover room 2b and vegetable room 2c, parasitic antennas 9a and 9b are respectively disposed in parallel with feeding antennas 8a to 8c.

Feeding antennas 8a to 8c are loop antennas where power feed is performed. The loop antennas input therein signal currents from their own power feeding units, thereby circumferentially radiating electromagnetic waves. Parasitic antennas 9a and 9b are loop antennas where power feed is not performed. In any loop antenna where self power feed is not performed, no signal current is not electrically supplied directly to a power feeding unit thereof. The loop antenna thus characterized does not include such a loop antenna that is supplied with an electric current based on mutual inductance by electromagnetic wave generated from any other loop antenna. In the described example, no power feeder is connected to the parasitic loop antennas, or there is no direct electrical supply of a signal current though a power feeder is connected thereto. In the parasitic loop antenna, an electric current can be generated when a magnetic field is supplied from any other loop antenna (either feeding or parasitic loop antenna). Parasitic antennas 9a and 9b may be connected to a resonance circuit for efficient communication at any desirable frequency, a matching circuit for impedance match, or a terminal resistance.

Feeding antennas 8a to 8c and parasitic antennas 9a and 9b are preferably loop antennas respectively having at least one wire turn with an opening at its center. The loop of the loop antenna may be any of circular, elliptical, substantially rectangular, and polygonal shapes. A material of the loop antenna can be suitably selected from an electrically conductive metal wire, a metal-made plate member, a metal-made foil member, and a metal-made cylindrical member. The feeding antenna and the parasitic antenna may be formed in the same shape from the same material, or may be formed from different materials.

Feeding antennas 8a to 8c and parasitic antennas 9a and 9b are desirably disposed so that respective open surfaces thereof, which are main surfaces formed by their loops, are substantially in parallel. When the open surfaces are thus substantially in parallel, electromagnetic wave generated by the feeding antenna increases an induction current generated in the parasitic antenna, thereby effectively generating electric current and electromagnetic wave in the parasitic antenna. A distance between the feeding antenna and the parasitic antenna is desirably such a distance that a sufficient induction current can be generated in the parasitic antenna. The distance is decided by the intensity of electric current fed to feeding antennas 8a to 8c and the intensity of generated magnetic field and electric field. The open surfaces may not be substantially in parallel. A desirable operation can be accomplished when the open surfaces are positioned through some angles relative to each other.

When the signal current is supplied from reader/writer unit 6 to feeding antennas 8a to 8c, a first high-frequency current which changes over time is generated. The first high-frequency current generates magnetic flux in the feeding antennas in accordance with the right-handed screw rule, and electromagnetic waves are thereby generated from feeding antennas 8a to 8c. The magnetic fluxes changing over time in feeding antennas 8a to 8c penetrate through parasitic antennas 9a and 9b. Then, the resulting mutual inductance generates an induction voltage in parasitic antennas 9a and 9b, causing the flow of a second high-frequency current. The second high-frequency current changing over time generates magnetic fluxes in parasitic antennas 9a and 9b in accordance with the right-handed screw rule. Thus, electromagnetic waves can be radiated from parasitic antennas 9a and 9b as well. As a result, parasitic antennas 9a and 9b are operable as antennas in the same manner as feeding antennas 8a to 8c. In the case where parasitic antennas 9a and 9b are disposed next to each other, parasitic antennas 9a and 9b can be operable as antennas in turns.

The combination of feeding antennas 8a to 8c and parasitic antennas 9a and 9b thus arranged increases an effective communication range. Comparing the radiation of electromagnetic waves by these antennas thus combined to the radiation by feeding antennas 8a to 8c alone, power consumption in the same communication range is largely reduced when feeding antennas 8a to 8c and parasitic antennas 9a and 9b are combined to radiate the electromagnetic waves.

The other structural elements for the stock management control in refrigerator 1 are described referring to the block diagram of FIG. 3. Controller unit 21 is responsible for a central role of the stock management in refrigerator 1. Controller unit 21 is in charge of inputting information detected by door opening/closure detector units 5, outputting an instruction to read the information of IC tag 11, inputting the read contents, calculating inputted information and data, and generating and transmitting control signals and data.

Cooling controller unit 22 controls a cooling function which is the basic function of the refrigerator. As is generally known, cooling controller unit 22 controls the number of rotations of a compressor using information of temperature sensors in the storage rooms such as refrigerating room 2a to thereby suitably adjust set temperatures.

Information management unit 23 compiles the information read from IC tag 11 by reader/writer unit 6 into a database. Information management unit 23 updates the database by adding data to be recorded or deleting data therefrom to store and manage the updated data as stock list 29.

Web server 24 is equipped with a web server function. Web server 24 provides a screen display of the stock information using a web browser from a device having a web client function such as a personal computer or television 51 through network unit 25. In the present embodiment, television 51, which is an external device capable of communicating with refrigerator 1 through network unit 25, includes web browser 57, device display unit 58, and device network unit 59. Accordingly, television 51 can obtain the stock information from web server 24 using web browser 57 through device network unit 59, LAN wiring 54, and network unit 25 of refrigerator 1, and the obtained stock information can be viewed on device display unit 58. Examples of the external device other than the television are a personal computer and a mobile telephone.

Controller unit 21 includes reporting unit 26 which outputs a musical tune or a voice/sound when any change is made to the stock information, and display unit 3 provided on a door surface of refrigerating room 2a to display thereon the stock information. Display unit 3 according to the present embodiment is a full dot liquid crystal display that can display characters without restrictions. Display unit 3 may be a segment liquid crystal display, an organic EL display, or an LED character display, and may be either of a color display or a black and white display.

Display unit 3 is equipped with operation unit 27 which is a touch panel. Depending on information displayed on operation unit 27, any intended operation can be performed via a screen of operation unit 27. Controller unit 21 is further equipped with calendar function unit 28 to display and manage, for example, entry dates and expiration dates.

Stock list 29 is the stock information managed by information management unit 23. Therefore, it is recommendable to store the stock information in, for example, a non-volatile memory so that the information is not lost when power supply is shut down in such an event as blackout.

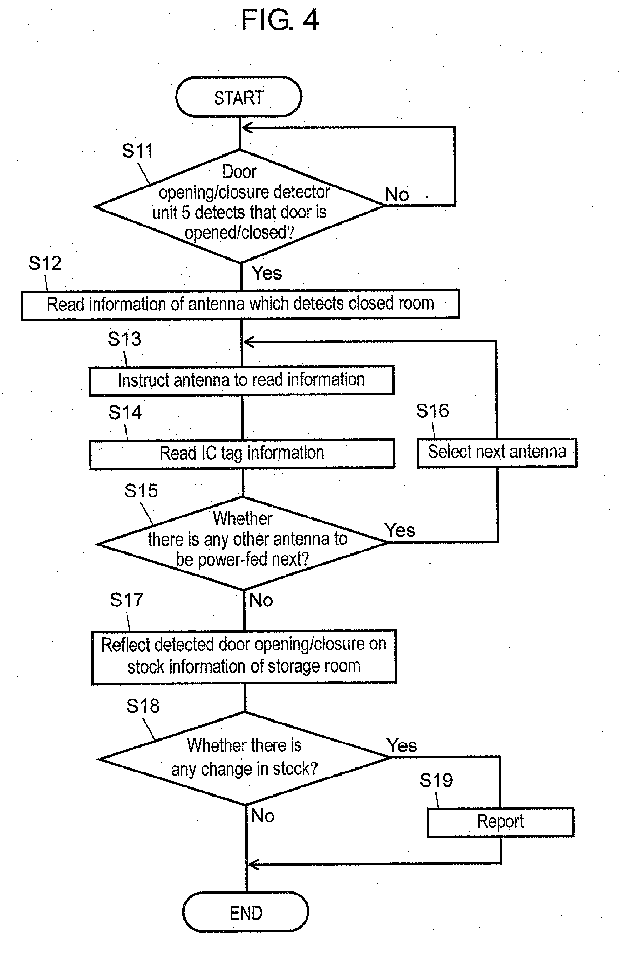

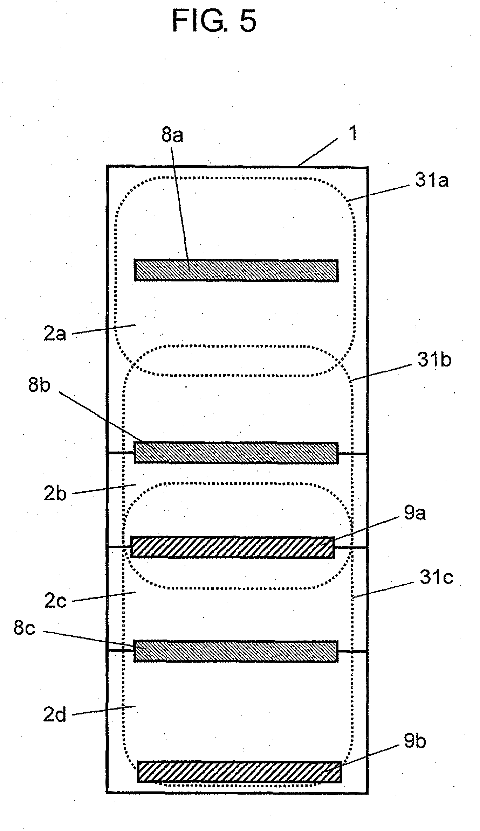

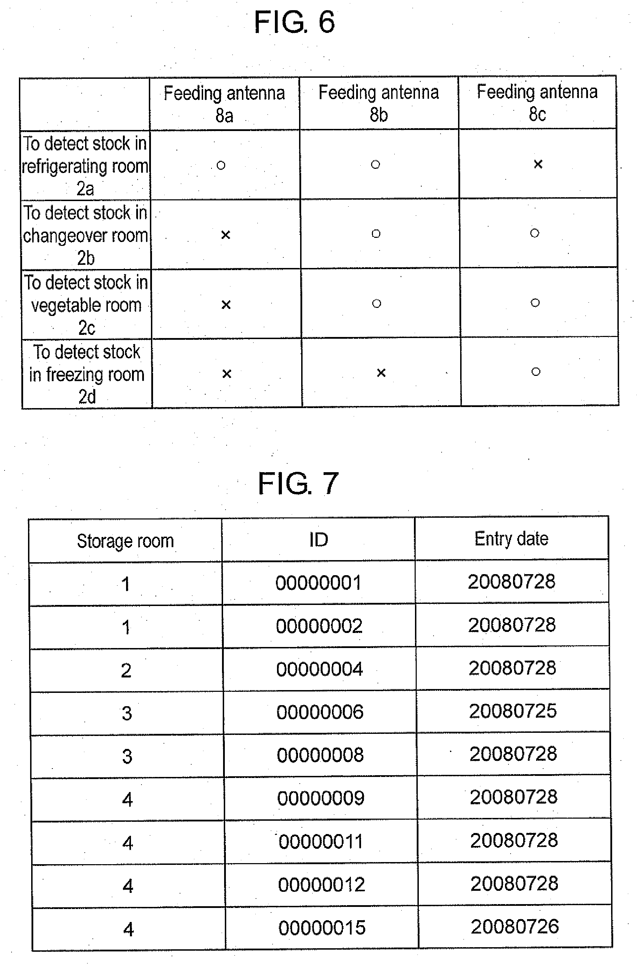

A stock management operation of the refrigerator is described referring to FIGS. 3 to 6. FIG. 4 is a flow chart illustrating the stock management operation of refrigerator 1 according to the embodiment. FIG. 5 is a schematic illustration of detectable ranges of the feeding antennas in refrigerator 1 according to the embodiment. FIG. 6 is a table reciting the feeding antennas to be power-fed when the stock information of the storage rooms in refrigerator 1 according to the embodiment is read.

Referring first to FIG. 4, it is determined whether the door is closed based on the detection result of door opening/closure detector units 5 (S11). When the closure of the door is detected in step S11 (Yes in S11), the table of FIG. 6 is referenced to read the antenna information of any of feeding antennas 8a to 8c with a circular mark appended thereto which detects the storage room where the closed door is provided (S12). Specifically, when it is detected that the door is opened/closed by door opening/closure detector unit 5a of refrigerating room 2a in FIG. 6, reader/writer unit 6 feeds power to feeding antennas 8a and 8b. When it is detected that the door is opened/closed by door opening/closure detector unit 5b of changeover room 2b, reader/writer unit 6 feeds power to feeding antennas 8b and 8c. When it is detected that the door is opened/closed by door opening/closure detector unit 5c of vegetable room 2c, reader/writer unit 6 similarly feeds power to feeding antennas 8b and 8c. When it is detected that the door is opened/closed by door opening/closure detector unit 5d of freezing room 2d, reader/writer unit 6 feeds power to feeding antenna 8c alone. When the closure of the door is not detected in step S11 (No in S11), step 11, in which door opening/closure detector units 5 determine whether their doors are opened/closed, is repeatedly carried out. Then, it is instructed to feed power serially to feeding antennas 8a to 8c from which the antenna information was read so that the information is read from IC tag 11 (S13).

The table illustrated in FIG. 6 was drawn based on the detectable areas of feeding antennas 8a to 8c illustrated in FIG. 5. FIG. 5 shows detectable areas 31a to 31c measured after impedance circuit constants of feeding antennas 8a to 8c were decided through simulations and experiments. In other words, feeding antennas 8a to 8c respectively have detectable areas 31a to 31c.

As illustrated in FIG. 5, detectable areas 31a to 31c of the feeding antennas partially overlap with one another. Detectable areas 31a to 31c are arranged to thus overlap with one another because the detectable range is very susceptible to environmental changes from the perspective of characteristics of a wireless communication, particularly easily affected by, for example, food 10 stored in the storage room and the direction of IC tag 11 appended to food 10, which makes it difficult to strictly define detectable areas 31a to 31c. Therefore, feeding antennas 8a to 8c each detect an area large enough to eliminate any undetectable area as far as possible. Thus, such an overlap of detectable areas is generated between respective pairs of feeding antennas 8a to 8c.

Detectable area 31b and detectable area 31c are dimensionally larger than detectable area 31a because of effects exerted by parasitic antennas 9a and 9b. Specifically, when feeding antennas 8b and 8c are fed with power, feeding antennas 8b and 8c respectively supply magnetic fields to parasitic antennas 9a and 9b, generating electric currents in parasitic antennas 9a and 9b. When feeding antenna 8b is fed with power, therefore, an electric current is similarly generated in parasitic antenna 9a. The power feed to feeding antenna 8b consequently makes detectable area 31b dimensionally larger than detectable area 31a of power-fed feeding antenna 8a. Similarly, when feeding antenna 8c is fed with power, electric currents are similarly generated in parasitic antennas 9a and 9b. The power feed to feeding antenna 8c consequently makes detectable area 31c dimensionally larger than detectable area 31a of power-fed feeding antenna 8a.

Referring back to FIG. 4, the openable/closable door of refrigerating room 2a is opened/closed so that food 10 with IC tag 11 appended thereto is stored therein. Since food 10 is stored in refrigerating room 2a, two feeding antennas 8a and 8b are serially fed with power referring to FIG. 6. First, feeding antenna 8a is fed with power and instructed to read the information of IC tag 11 (S13). When feeding antenna 8a reads the information of IC tag 11 (S14), controller unit 21 determines whether there is any other antenna to be fed with power (S15). When step S15 determines that there is an antenna to be power-fed next (Yes in S15), the next antenna is selected (S16). According to the present embodiment, feeding antenna 8b is to be power-fed as the next antenna. Therefore, the operation returns to step S13 to carry out steps S13 to S15 to feeding antenna 8b.

When second feeding antenna 8b is fed with power and the read of the information of IC tag 11 is completed (No in S15), the information of IC tag 11 read twice is compared to the stock information stored and managed in information management unit 23 to update the stock information of the storage room where the door has been opened/closed (S17). Next, it is determined whether there is any change to the stock in the refrigerator, for example, entry of new food 10 or removal of food 10 already stored (S18). Having determined that the foods in stock changed (Yes in S18), details of the change of the stock information are reported in a sound/voice (S19) to notify a user of the updated stock information so that the user is assured that the stock management is properly handled. The reporting sound is a blip sound or a voice guidance such as "the entry of a new food has been confirmed", or "the food has been removed". When no change is detected in the foods in stock in step S18 (No in step S18), the operation ends.

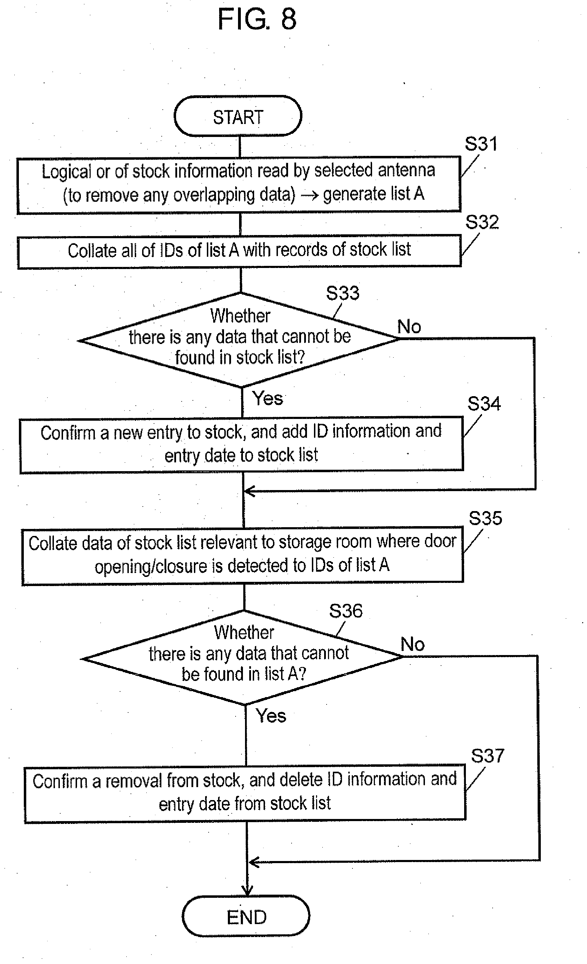

Referring to FIGS. 7 and 8, step S17 illustrated in FIG. 4, which is the step of reflecting the detected opening/closure of the door on the stock information of the storage room, is described in detail. FIG. 7 illustrates data of a stock list managed by information management unit 23 by way of example. FIG. 8 is a flow chart of the step of reflecting the opening/closure of the door detected by information management unit 23 on the stock information of the storage room.

In the illustration of stock list 29 in FIG. 7. "1" in the column of storage rooms denotes refrigerating room 2a, "2" denotes changeover room 2b, "3" denotes vegetable room 2c, and "4" denotes freezing room 2d. According to stock list 29, there are two in-stock foods in refrigerating room 2a, there is one in-stock food in changeover room 2b, there are two in-stock foods in vegetable room 2c, and there are four in-stock foods in freezing room 2d. Therefore, there are nine foods in stock in total. The ID of the IC tag recited in the description is an simple eight-digit number, however, may be a unique combination of characters. An entry date recorded therein is a date when the entry of food 10 was detected. Though not recited in the stock list of FIG. 7, a database in which the name of the food and its expiry date are associated with each other based on the ID information can be developed so that the food name is displayed on display unit 3 of the refrigerator as a part of the stock information. In the case where information such as the food name or food code is written in IC tag 11, the information is managed alongside the ID in stock list 29.

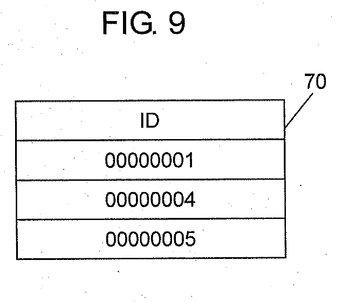

Referring to FIG. 8, all of the feeding antennas necessary for the stock confirmation of the storage room where the opening/closure of the door is detected are fed with power so that the information of IC tag 11 is read therefrom, and an entry/removal list 70, from which any overlapping read IDs are excluded, is generated (S31). A description is given below referring to an example in which the two IC tags, "ID = 00000001" and "ID = 00000005" are detected by feeding antenna 8a, and the two IC tags, "ID = 00000004" and "ID = 00000005" are detected by feeding antenna 8b when the door of refrigerating room 2a is opened/closed. The ID "ID = 00000005" was overlappingly detected by feeding antennas 8a and 8b. Therefore, three IC tags were checked after any overlapping data was excepted. As a result of step S31, data illustrated in FIG. 9 is generated as entry/removal list 70. More specifically, the logical OR of the stock information read by feeding antenna 8a and then 8b is obtained so that entry/removal list 70, from which any overlapping data is excluded, is generated.

Then, all of the IDs in entry/removal list 70 are collated with the IDs of the stock list illustrated in FIG. 7 (S32) to determine whether there is any data which cannot be found in the stock list (S33). When any data which cannot be found in the stock list is detected in step S33 (Yes in step 33), a new entry to the stock is determined, and its ID information and entry date are added to the stock list (S34). In the present embodiment, "ID = 00000005" of entry/removal list 70 cannot be found in the stock list (S33). Therefore, it is determined that the ID represents a new entry to the stock of the refrigerator, and its entry date is added to the stock list as a new record (S34).

All of the IDs in entry/removal list 70 are collated with the data of the storage room where the door opening/closure is detected in the stock list (S35) to determine whether there is any data that can be found in the stock list but cannot be found in entry/removal list 70 (S36). Having detected in step S36 the presence of any data that can be found in the stock list but cannot be found in entry/removal list 70 (Yes in S36), it is determined that any food is removed from the stock, and the ID information and entry date of the food determined so are deleted from the stock list (S37). Then, the operation ends. In the present embodiment, when the recorded IDs of the stock list relevant to refrigerating room 2a where the door opening/closure is detected are collated with entry/removal list 70 (S35), "ID = 00000002" cannot be found in entry/removal list 70 (S36). Therefore, it is determined that food 10 with "ID = 00000002" was removed from refrigerating room 2a, and any relevant recorded data is deleted from the stock list (S37).

Having determined in step S33 the presence of any data that cannot be found in the stock list (No in S33), it is determined that there is no new entry to the stock. Then, the operation proceeds to step S34. Having determined in step S36 that there is no data that can be found in neither the stock list nor entry/removal list 70 (No in S36), it is determined that none of the foods has been removed. Then, the operation ends.

Information management unit 23 according to the present embodiment can manage the stock information by each storage room as stock list 29 and convert stock list 29 into a display format that can be displayed on web server 24, and then transmit the converted stock list 29 by way of network unit 25 of refrigerator 1. Therefore, the stock information of refrigerator 1 can be viewed on device display unit 58 of the web client device such as television 51 or personal computer using web browser 57 by way of device network unit 59. This is very convenient for the user because he needs not be close to refrigerator 1 to check the stock information of refrigerator 1. Further, information management unit 23 can be connected to Internet network 55 using ADSL or optical fiber by way of relay device 53 such as a modem or a router. When thus connected, the foods in stock in refrigerator 1 can be checked away from home on mobile telephone 56 or personal computer.

As described so far, in the present embodiment, door opening/closure detector units 5 are respectively provided in the storage rooms, and each storage room where food 10 with IC tag 11 appended thereto is stored can be identified by the information of the storage room detected by door opening/closure detector unit 5 even when IC tags 11 in a plurality of storage rooms are detected by one of feeding antennas 8a to 8c. This enables the stock management by each storage room.

To feed power to feeding antennas 8a to 8c in the present embodiment, any of feeding antennas 8a to 8c which detect the storage room where the door closure is detected is fed with power in turns after door opening/closure detector unit 5 detects that the door is closed as illustrated in step S11 of FIG. 4. The feeding antennas may be fed with power intermittently after the door closure is detected by door opening/closure detector unit 5 so that any change of the stock information (comparison of the detected IC tag information) can be detected for the stock management. Another option is to feed power to the feeding antenna which detects the storage room after a given period of time passed when it is estimated that openable/closable door 4 once opened is closed again since the door opening is detected.

There are three options for the timing of feeding power to feeding antennas 8a to 8c; power feed when door opening/closure detector unit 5 detects that openable/closable door 4 is opened, power feed when door opening/closure detector unit 5 detects that openable/closable door 4 is closed, and power feed when door opening/closure detector unit 5 detects that openable/closable door 4 is opened and then closed. The power feed to feeding antennas 8a to 8c may continue over a given period of time or may be intermittent as described earlier.

In the present embodiment, detectable areas 31a to 31c of feeding antennas 8a to 8c may be simply impedance-adjusted in accordance with an overlapping degree therebetween as illustrated in FIG. 5. In the case where detectable areas 31a to 31c of feeding antennas 8a to 8c cover a plurality of storage rooms, the storage room where the entry or removal takes place can be determined by using the information of the door opening/closure. The present embodiment makes it unnecessary to arrange detectable areas 31a to 31c of feeding antennas 8a to 8c not to cover a plurality of storage rooms as conventionally done. Therefore, it is unnecessary to strictly adjust the impedance in order to accurately define detectable areas 31a to 31c. Further, it is unnecessary to minimize the communicatable distance between feeding antennas 8a to 8c and IC tag 11 as possible, it is unnecessary to provide a large number of antennas in one storage room even if the storage room has a large capacity, and it is unnecessary to provide a metal plate in a partitioning member between the storage rooms to block the leakage of electromagnetic wave or electric wave to the other storage room.

According to the present embodiment, three feeding antennas 8a to 8c are respectively provided in refrigerating room 2a, partitioning member between refrigerating room 2a and changeover room 2b, and partitioning member between vegetable room 2c and freezing room 2d in place of providing antennas in all of four storage rooms of refrigerator 1. This achieves cost reduction and further reduces the number of wirings to be routed.

According to the present embodiment, the feeding antennas are supplied with power only when the door is opened/closed, which favorably reduces power consumption. Further, power is selectively supplied to only the antenna necessary for checking the stock of the storage room where the door opening/closure is detected as illustrated in FIG. 6. This can save energy.

According to the present embodiment, three feeding antennas 8a to 8c are provided transversely, however, may be longitudinally provided along a wall surface. The number of feeding antennas 8a to 8c can be unlimitedly increased. Similarly, parasitic antennas 9a and 9b may be provided longitudinally as far as they are in parallel with feeding antennas 8a to 8c.

In the case of a small storage such as a compact refrigerator wherein it is unnecessary to provide a plurality of feeding antennas to detect an entire storage space therein, antenna selector 7 can be omitted.

Though the present embodiment has been described referring to refrigerator 1 which is an example of the storage, any storage can be similarly accomplished as far as it has a storage space where opening/closure of a door or a cap can be detected such as a storehouse and a warehouse.

In the present embodiment, the electromagnetic induction coupling was employed as the RFID technique, however, an electric wave system using, for example, UHF band may be employed, in which case parasitic antennas 9a and 9b are unnecessary.

In the present embodiment, IC tag 11 is of a passive type for which neither a battery nor power feed is necessary. IC tag 11 may be of a semi-passive type which is driven by a battery or an active type to which power is supplied.

To accomplish a method for controlling the storage or the storage system described in the present embodiment, a storage control program or a storage system control program can be created and run on a computer as a whole autonomous device or a part of the device.

The structural elements described in the present embodiment may be accomplished in the form of a program in which hard resources such as electric device, information device, computer, and server provided with a CPU (or microcomputer), a RAM, a ROM, a storage/recording device, and an input/output device are coordinated. According to such a program, new functions can be easily distributed, updated, and installed through recording on a recording medium such as a magnetic medium or an optical medium or distribution on a communication line such as the Internet.

The present embodiment has been described referring to the stock management of the storage where an object to be stored such as a food is stored, however, is also applicable to breeding management of animals, plants, or insects.

As described so far, the storage according to the present invention includes: storage rooms formed by sectionalizing an interior space of the storage into a plurality of spaces; an openable/closable door provided in each of the storage rooms; a door opening/closure detector unit which detects whether the openable/closable door is opened/closed; a reader unit which reads information of a particular information recording medium in each of the storage rooms; and a feeding antenna unit which is fed with power from the reader unit for wireless communication. The storage according to the present invention further includes: a controller unit which feeds power to the feeding antenna unit from the reader unit in response to at least one of the opening and the closure of the openable/closable door detected by the door opening/closure detector unit; and an information management unit which manages the information read by the reader unit as stock information.

With this configuration, in the case where a detectable range of the feeding antenna unit covers a plurality of storage rooms, the storage room where a new object is added or the object is removed from the current stock can be identified based on the information whether the door is opened/closed obtained from the door opening/closure detector unit. In the case where a detectable range of the feeding antenna unit covers a plurality of storage rooms, the storage room where a new object is added or the object is removed from the current stock can be identified based on the information whether the door is opened/closed. This configuration makes it unnecessary to strictly adjust the impedance as required in the conventional storages in order to identify the detectable area. Further, it is unnecessary to impose any particular restrictions to the communicatable distance between the antennas and the IC tag, it is unnecessary to provide a large number of antennas in any storage room having a large capacity, and it is unnecessary to provide a metal plate in a partitioning member between the storage rooms to block the leakage of electromagnetic wave or electric wave to the other storage room.

The storage according to the present invention includes a parasitic antenna unit disposed in parallel with the feeding antenna unit. This configuration can detect any stored object to which the particular information recording medium is appended in a broader range with less power consumption. For example, a plurality of parasitic loop antenna are provided in the refrigerator so that a feeding loop antenna can excite the parasitic loop antennas. Accordingly, the information can be read over a larger distance with less power consumption. It is unnecessary provide means for connecting the parasitic loop antenna to the power feeder, making it unnecessary to route a wiring.

In the storage according to the present invention, the feeding antenna unit includes a plurality of feeding antennas, wherein the reader unit is configured to select any of the feeding antennas to be power-fed. With this configuration, in the case where the particular information recording media in all of the storage areas of the storage rooms cannot be detected by one feeding antenna, a plurality of feeding antennas can be selected and used so that all of the particular information recording media in the storage rooms can be read. The storage room where the stored object is stored can be identified based on the information whether the door is opened/closed obtained from the door opening/closure detector unit.

In the storage according to the present invention, the reader unit is configured to select at least one of the feeding antennas to be power-fed which possibly detects the particular information recording medium in the storage room where at least one of the opening and the closure of the openable/closable door is detected by the door opening/closure detector unit. This configuration selectively feeds power to the feeding antenna which possibly detects any stock change, thereby reducing power consumption. This configuration is further advantageous in that the feeding antennas to be power-fed are less often changed, reducing a processing time until the particular information recording medium is read to identify the storage room after at least one of the opening and the closure of the openable/closable door is detected.

The storage according to the present invention further includes a reporting unit which notifies any change of the management information in the information management unit using a sound. With this configuration, the user can know the detection of the entry or removal of any stored object to which the particular information recording medium is appended by catching a musical tune or a sound/voice. Accordingly, the user can be reassured that the stock management is properly handled.

The storage according to the present invention further includes a display unit on which the management information of the information management unit can be viewed by each or the storage rooms. With this configuration, the user can view the stock information by each of the storage rooms displayed on the display unit, and he needs not open the openable/closable door to check any stored object he wants. This makes it unnecessary for the user to open the door whenever unnecessary, thereby preventing a refrigerating performance from deteriorating, which is energy-saving.

A storage system according to the present invention includes: a device; and the storage equipped with a network unit which can communicate with the device, wherein the device has another display unit and another network unit and is configured to display the management information of the information management unit on the another display unit of the device by way of the network unit and the another network unit. This configuration is very convenient for the user because he needs not be close to the storage rooms to check the stock information of the storages rooms.

In the storage system according to the present invention, the storage is equipped with a web server, and the device is equipped with a web browser, so that the management information of the information management unit supplied from the web server through the web browser is displayed on the another display unit of the device. This configuration is very convenient for the user because he needs not be close to the storage rooms, and can confirm the stock information of the storage rooms by using the device equipped with the web browser such as a general-purpose personal computer.

A storage control method according to the present invention is a method for controlling a storage including storage rooms formed by sectionalizing an interior space of the storage into a plurality of spaces, an openable/closable door provided in each of the storage rooms, a door opening/closure detector unit which detects whether the openable/closable door is opened/closed, a reader unit which reads information of a particular information recording medium in each of the storage rooms; and a feeding antenna unit which is fed with power from the reader unit for wireless communication, a controller unit which feeds power to the feeding antenna unit from the reader unit; and an information management unit which manages the information read by the reader unit as stock information. Further, the storage control method according to the present invention includes the steps of detecting at least one of the opening and the closure of the openable/closable door using the door opening/closure detector unit, and feeding power from the reader unit to the feeding antenna unit in response to the detection of at least one of the opening and the closure of the openable/closable door.

With this configuration, in the case where a detectable range of the feeding antenna unit covers a plurality of storage rooms, the storage room where a new object is added or the object is removed from the current stock can be identified based on the information whether the door is opened/closed obtained from the door opening/closure detector unit. This configuration makes it unnecessary to strictly adjust the impedance as required in the conventional storages in order to identify the detectable area. Further, it is unnecessary to impose any particular restrictions to the communicatable distance between the antennas and the particular information recording medium, it is unnecessary to provide a large number of antennas in any storage room having a large capacity, and it is unnecessary to provide a metal plate in a partitioning member between the storage rooms to block the leakage of electromagnetic wave or electric wave to the other storage room.

A storage system control method according to the present invention is a method for controlling a storage system including a device, and the storage equipped with a network unit which can communicate with the device, wherein the device has another display unit and another network unit and is configured to display the management information of the information management unit on the another display unit of the device by way of the network unit and the another network unit. Further, the storage system control method according to the present invention includes the steps of detecting at least one of the opening and the closure of the openable/closable door using the door opening/closure detector unit, and feeding power from the reader unit to the feeding antenna unit in response to the detection of at least one of the opening and the closure of the openable/closable door.

With this configuration, the user can confirm the stock information of the storage at any position away from the storage. Further, even in the case where a detectable range of the feeding antenna unit covers a plurality of storage rooms, the storage room where a new object is added or the object is removed from the current stock can be identified based on the information whether the door is opened/closed obtained from the door opening/closure detector unit. This configuration makes it unnecessary to strictly adjust the impedance as required in the conventional storages in order to identify the detectable area. Further, it is unnecessary to impose any particular restrictions to the communicatable distance between the antennas and the particular information recording medium. It is unnecessary to provide a large number of antennas in any storage room having a large capacity. Further, it is unnecessary to provide a metal plate in a partitioning member between the storage rooms to block the leakage of electromagnetic wave or electric wave to the other storage room.

A program for controlling the storage according to the present invention is a program which makes a computer run the storage control method thereon. With this configuration, such a program can readily accomplish the storage by coordinating hard resources such as electric device, information device, computer, and server. Such a program can be easily distributed or installed through recoding on a recording medium or program distribution on a communication line.

A program for controlling the storage system according to the present invention is a program which makes a computer run the storage system control method thereon. With this configuration, such a program can readily accomplish the storage by coordinating hard resources such as electric device, information device, computer, and server. Such a program can be easily distributed or installed through recoding on a recording medium or program distribution on a communication line.

### INDUSTRIAL APPLICABILITY

The present invention, wherein a detectable area of a feeding antenna unit can cover a plurality of storage rooms, is applicable to stock management of an object to be stored such as food and further to breeding management of animals, plants, or insects.

## Claims

1. A storage comprising:
storage rooms formed by sectionalizing an interior space of the storage into a plurality of spaces;
an openable/closable door provided in each of the storage rooms;
a door opening/closure detector unit which detects whether the openable/closable door is opened/closed;
a reader unit which reads information of a particular information recording medium in each of the storage rooms;
a feeding antenna unit which is fed with power from the reader unit for wireless communication;
a controller unit which feeds power to the feeding antenna unit from the reader unit in response to at least one of the opening and the closure of the openable/closable door detected by the door opening/closure detector unit; and
an information management unit which manages the information read by the reader unit as stock information.

2. The storage according to claim 1, comprising a parasitic antenna unit provided in parallel with the feeding antenna unit.

3. The storage according to claim 1, wherein
the feeding antenna unit includes a plurality of feeding antennas, and the reader unit is configured to select any of the feeding antennas to be power-fed.

4. The storage according to claim 3, wherein
the reader unit is configured to select at least one of the feeding antennas to be power-fed which possibly detects the particular information recording medium in the storage room where at least one of the opening and the closure of the openable/closable door is detected by the door opening/closure detector unit.

5. The storage according to claim 1 further comprising a reporting unit which notifies any change of the management information in the information management unit with a sound.

6. The storage according to claim 1 further comprising a display unit on which the management information on each of the storage rooms can be viewed, which information is supplied from the information management unit.

7. A storage system comprising:
a device; and
a storage of claim 1 equipped with a network unit which can communicate with the device, wherein
the device has another display unit and another network unit and is configured to display the management information of the information management unit on the another display unit of the device by way of the network unit and the another network unit.

8. The storage system according to claim 7, wherein
the storage is equipped with a web server, and the device is equipped with a web browser,
wherein the management information of the information management unit supplied from the web server through the web browser is displayed on the another display unit of the device.

9. A method for controlling a storage, the storage comprising:
storage rooms formed by sectionalizing an interior space of the storage into a plurality of spaces,
an openable/closable door provided in each of the storage rooms,
a door opening/closure detector unit which detects whether the openable/closable door is opened/closed,
a reader unit which reads information of a particular information recording medium in each of the storage rooms,
a feeding antenna unit which is fed with power from the reader unit for wireless communication,
a controller unit which feeds power to the feeding antenna unit from the reader unit, and
an information management unit which manages the information read by the reader unit as stock information, the method comprising the steps of:
detecting at least one of the opening and the closure of the openable/closable door using the door opening/closure detector unit; and
feeding power from the reader unit to the feeding antenna unit in response to the detection of at least one of the opening and the closure of the openable/closable door.

10. A method for controlling a storage system, the system comprising:
a device, and a storage of claim 1 equipped with a network unit which can communicate with the device, wherein the device has another display unit and another network unit and is configured to display the management information of the information management unit on the another display unit of the device by way of the network unit and the another network unit,
the method comprising the steps of:
detecting at least one of the opening and the closure of the openable/closable door using the door opening/closure detector unit; and
feeding power from the reader unit to the feeding antenna unit in response to the detection of at least one of the opening and the closure of the openable/closable door.

11. A control program which makes a computer run the storage control method of claim 9.

12. A control program which makes a computer run the storage system control method of claim 10.

## Amended claims

### Amended claims under Art. 19.1 PCT

**1.** (Amended) A storage comprising:
storage rooms formed by sectionalizing an interior space of the storage into a plurality of spaces;
an openable/closable door provided in each of the storage rooms;
a door opening/closure detector unit which detects whether the openable/closable door is opened/closed;
a reader unit which reads information of a particular information recording medium in each of the storage rooms;
a feeding antenna unit which is fed with power from the reader unit for wireless communication;
a controller unit which feeds power to the feeding antenna unit from the reader unit in response to at least one of the opening and the closure of the openable/closable door detected by the door opening/closure detector unit; and
an information management unit which manages the information read by the reader unit as stock information, wherein
the feeding antenna unit includes a plurality of feeding antennas, and
the reader unit selects at least one of the feeding antennas for feeding power, which at least one antenna possibly detects the particular information recording medium in the storage room where at least one of the opening and the closure of the openable/closable door is detected by the door opening/closure detector unit.

**2.** (Amended) The storage according to claim 1, wherein
the reader unit feeds power to a particular antenna of the plurality of feeding antennas, which particular antenna is associated with the door opening/closure detector unit.

**3.** (Canceled)

**4.** (Canceled)

**5.** The storage according to claim 1 further comprising a reporting unit which notifies any change of the management information in the information management unit with a sound.

**6.** The storage according to claim 1 further comprising a display unit on which the management information on each of the storage rooms can be viewed, which information is supplied from the information management unit.

**7.** A storage system comprising:
a device; and
a storage of claim 1 equipped with a network unit which can communicate with the device, wherein
the device has another display unit and another network unit and is configured to display the management information of the information management unit on the another display unit of the device by way of the network unit and the another network unit.

**8.** The storage system according to claim 7, wherein
the storage is equipped with a web server, and the device is equipped with a web browser,
wherein the management information of the information management unit supplied from the web server through the web browser is displayed on the another display unit of the device.

**9.** (Amended) A method for controlling a storage, the storage comprising:
storage rooms formed by sectionalizing an interior space of the storage into a plurality of spaces,
an openable/closable door provided in each of the storage rooms,
a door opening/closure detector unit which detects whether the openable/closable door is opened/closed,
a reader unit which reads information of a particular information recording medium in each of the storage rooms,
a feeding antenna unit which is fed with power from the reader unit for wireless communication,
a controller unit which feeds power to the feeding antenna unit from the reader, and
an information management unit which manages the information read by the reader unit as stock information, wherein the feeding antenna unit includes a plurality of feeding antennas,
the method comprising the steps of:
detecting at least one of the opening and the closure of the openable/closable door using the door opening/closure detector unit; and
feeding power from the reader unit to at least one of the feeding antennas, which at least one antenna possibly detects the particular information recording medium in the storage room where at least one of the opening and the closure of the openable/closable door is detected.

**10.** A method for controlling a storage system, the system comprising:
a device, and
a storage of claim 1 equipped with a network unit which can communicate with the device, wherein
the device has another display unit and another network unit and is configured to display the management information of the information management unit on the another display unit of the device by way of the network unit and the another network unit,
the method comprising the steps of:
detecting at least one of the opening and the closure of the openable/closable door using the door opening/closure detector unit, and
feeding power from the reader unit to the feeding antenna unit in response to the detection of at least one of the opening and the closure of the openable/closable door.

**11.** A control program which makes a computer run the storage control method of claim 9.

**12.** A control program which makes a computer run the storage system control method of claim 10.
